(19) **Europäisches Patentamt / European Patent Office / Office européen des brevets**

(11) **EP 2 656 589 B1**

(12) **FASCICULE DE BREVET EUROPEEN**

(45) Date de publication et mention de la délivrance du brevet:
**11.02.2015 Bulletin 2015/07**

(21) Numéro de dépôt: **11817398.8**

(22) Date de dépôt: **19.12.2011**

(51) Int Cl.:
***H04L 29/08*** *(2006.01)*

(86) Numéro de dépôt international:
**PCT/FR2011/053061**

(87) Numéro de publication internationale:
**WO 2012/085432 (28.06.2012 Gazette 2012/26)**

(54) **PROCEDE ET DISPOSITIF DE COMMUNICATION DE DONNEES NUMERIQUES**

VERFAHREN UND VORRICHTUNG FÜR DIGITALE DATENÜBERTRAGUNG

METHOD AND DEVICE FOR DIGITAL DATA COMMUNICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1061154**

(43) Date de publication de la demande:
**30.10.2013 Bulletin 2013/44**

(73) Titulaire: **Orange**
**75015 Paris (FR)**

(72) Inventeurs:
• **FIEAU, Frédéric**
**F-22700 Perros Guirec (FR)**

• **OMNES, Nathalie**
**F-22560 Trebeurden (FR)**
• **FROMENTOUX, Gaël**
**F-22560 Ile Grande (FR)**

(74) Mandataire: **Delumeau, François Guy et al**
**Cabinet Beau de Loménie**
**158, rue de l'Université**
**75340 Paris Cedex 07 (FR)**

(56) Documents cités:
**US-A1- 2002 143 888     US-A1- 2004 133 650**

**Description**

Domaine de l'invention

L'invention se situe dans le contexte des réseaux de télécommunications et vise plus particulièrement un procédé de communications utilisé pour mémoriser, déployer et distribuer des données numériques dans le réseau.

Arrière-plan technique de l'invention

Il est connu que le nombre et le volume des contenus distribués dans le réseau de télécommunication croît très fortement et qu'il est même susceptible de doubler d'ici 2012.

Par ailleurs, les nouveaux terminaux (téléphones portables, ordinateurs légers, assistants personnels, téléphones intelligents,...) permettent aux utilisateurs de produire désormais le contenu, de façon beaucoup plus souple.

On connaît notamment des caméras numériques embarquées dans de tels équipements.

Les réseaux de télécommunications de type IP offrent la possibilité de mémoriser ces données numériques dans différents équipements et de gérer la zone géographique dans laquelle ces contenus sont distribués.

Par ailleurs, certains de ces contenus peuvent être d'audience réduite, d'autres susceptibles d'être accédés par une audience beaucoup plus large voire mondiale. Afin de répondre à cette demande, les opérateurs des réseaux de télécommunications ont déployé des architectures hiérarchiques (type CDN) où le contenu est mémorisé initialement au niveau central pour gérer la distribution de contenu et faire face à l'augmentation de trafic.

Malheureusement, cette architecture nécessite de prévoir des ressources importantes pour la mémorisation des données dans des équipements du réseau.

On connaît, également, des réseaux conformes à l'architecture pair à pair (peer to peer), dans lequel les contenus numériques sont stockés et échangés au niveau des terminaux des utilisateurs.

Cette solution n'est pas satisfaisante non plus, car elle induit une augmentation de trafic pour l'accès à ces données et une instabilité de la configuration suite aux connexions et déconnexions des utilisateurs. Par ailleurs, un même terminal ne peut pas servir un grand nombre de requêtes d'accès au contenu, car son débit le restreint. L'invention vise un mécanisme de distribution, (mémorisation initiale, déploiement et livraison) de contenu qui ne souffre pas des inconvénients de l'art antérieur.

Objet et résumé de l'invention

Plus précisément, l'invention concerne un procédé de communications de données numériques conforme à la revendication 1, mis en oeuvre par une unité réceptrice dans un réseau hiérarchique, cette unité ayant une connaissance des niveaux hiérarchiques des noeuds du réseau, ce procédé comprenant, sur réception d'une requête de mémorisation de données émises par une première unité émettrice :

- une étape de sélection d'au moins une première entité de mémorisation des données, cette étape de sélection prenant en compte au moins le niveau hiérarchique de cet entité de mémorisation dans le réseau ; et
- une étape d'envoi, à la première unité émettrice, d'une information lui permettant d'obtenir l'identifiant de l'entité de mémorisation des données sélectionnée.

Corrélativement, l'invention concerne un dispositif de communication de données numériques pouvant être incorporées dans une unité réceptrice dans un réseau hiérarchique, cette entité réceptrice ayant connaissance des niveaux hiérarchiques des noeuds. Ce dispositif comprend :

- des moyens de réception d'une requête de mémorisation de données émise par une première unité émettrice ;
- des moyens de sélection d'une première entité de mémorisation des données prenant en compte au moins le niveau hiérarchique de cette entité de mémorisation de données dans le réseau ; et
- des moyens d'envoi, à la première unité émettrice, d'une information lui permettant d'obtenir l'identifiant de la première entité de mémorisation des données.

Ainsi, et d'une façon générale, il est important de bien comprendre que l'invention permet de choisir l'unité de mémorisation des données en fonction du niveau hiérarchique de cette unité de mémorisation dans le réseau.

On peut ainsi choisir de mémoriser les données à un niveau intermédiaire et non pas seulement, comme dans l'état actuel de la technique, à un niveau central ou au niveau des terminaux. Ces solutions ayant l'inconvénient soit de nécessiter une mémoire importante (cas central), soit un trafic important, une limitation du nombre d'accès aux données et une instabilité de la configuration (mémorisation au niveau des terminaux).

Dans un mode particulier de réalisation de l'invention, l'étape de sélection de la première unité de mémorisation prend aussi en compte une localisation de cette première unité émettrice. A titre d'exemple, la localisation peut être une localisation géographique ou une localisation réseau, par exemple une plage d'adresses à laquelle appartient l'unité émettrice.

Cette caractéristique permet avantageusement de minimiser le coût du transport des données lors de leur première mémorisation, en choisissant l'unité de mémorisation la plus proche de l'unité émettrice. On notera que l'unité de mémorisation sélectionnée peut être l'unité émettrice elle-même, la requête de mémorisation indiquant les contenus à partager sur cette unité émettrice.

Le niveau hiérarchique peut aussi être choisi en fonction de l'audience estimée pour les données : une zone géographique restreinte ou au contraire indépendamment de considération géographique (communauté dispersée géographiquement). Dans un mode particulier de l'invention, la sélection de la première entité de mémorisation prend en compte, en plus du niveau hiérarchique, au moins un élément choisi parmi le coût du transfert des données sur les liens du réseau, le coût de mémorisation de ces données par l'entité de mémorisation, une localisation des terminaux à qui sont destinées les données. La localisation précitée peut être une localisation géographique ou une localisation réseau.

Cette caractéristique permet avantageusement de répartir les données numériques dans différentes entités de mémorisation pour optimiser le coût de transfert, de mémorisation et de livraison du contenu du point de vue de l'opérateur.

Dans un autre mode de réalisation, la sélection du niveau hiérarchique prend aussi en compte la popularité du contenu, les caractéristiques de ce contenu et/ou de l'auteur de ce contenu.

Dans un mode particulier de réalisation de l'invention, le procédé de communication comprend en outre une étape de mémorisation de l'identifiant de l'unité de mémorisation dans une liste associée à un identifiant unique des données, cet identifiant pouvant être obtenu à partir de champs de la requête de mémorisation.

Il convient en premier lieu de noter que l'invention permet d'identifier les données numériques indépendamment du format de la requête de mémorisation, seules les informations contenues dans la requête étant suffisantes.

On peut donc identifier différemment les mêmes données à partir de requêtes de mémorisation de différents types.

Par exemple, la requête peut contenir l'identifiant des données. En variante, on peut combiner des informations contenues dans d'autres champs de la requête, celle-ci ne comprend pas toujours explicitement l'identifiant des données, pour reconstituer cet identifiant.

Pour obtenir un tel identifiant on peut, par exemple, utiliser le document « Universal Digital Code For Unique Content Identification », publié sous le n° US 2007/0180468 A1. Document US 2002/0143888 (03/10/2002) divulgue un procédé permettant de stocker un contenu pour des fournisseurs de contenu participants qui stocke d'abord un contenu d'identité de fournisseur de contenu donné.

Une fois les données mémorisées dans le réseau pour la première fois (ingestion) l'invention permet de redistribuer les données dans d'autres entités de mémorisation.

Cette redistribution peut être effectuée soit sur détection d'un événement particulier, soit au fur et à mesure de la réception de requêtes d'accès à ces données.

Dans le mode de réalisation décrit ici, la redistribution des données consiste à mettre à jour la liste de distribution (en ajoutant ou en supprimant des unités de mémorisation) et à informer des unités concernées afin que celles-ci organisent la redistribution des données. L'invention gère également la réception d'une requête d'accès aux données numériques par une unité réceptrice.

Ainsi, dans un mode particulier de réalisation de l'invention, le procédé de communication comprend, sur réception d'une requête d'accès aux données numériques, la requête étant émise par une deuxième unité émettrice (éventuellement la même que la première unité émettrice) :

- une étape de détermination des noeuds dits de chemin entre la deuxième unité émettrice et le dernier noeud avant la racine du réseau ;
- au moins pour chacun de ces noeuds de chemin, une étape de comptage des requêtes d'accès reçues par ce noeud pour ces données ;
- une étape de mise à jour de la liste effectuée en fonction des résultats des étapes de comptage ;
- une étape de sélection, parmi celles de la liste, d'une deuxième entité de mémorisation désignée pour répondre à la requête d'accès ; et
- une étape d'envoi d'une information permettant à cette unité émettrice d'obtenir un identifiant de la deuxième entité de mémorisation.

On notera que ce traitement n'a de sens que si les données sont effectivement toujours mémorisées dans une entité de mémorisation du réseau, cette requête d'accès étant ignorée dans le cas contraire, c'est-à-dire uniquement si le contenu n'est plus mémorisé dans le réseau.

Ce mode de réalisation particulier est très avantageux, puisqu'il permet de gérer la charge du réseau en fonction des requêtes d'accès réellement effectuées sur ces données.

On obtient ainsi un procédé dynamique de distribution (mémorisation, déploiement et livraison) de données numériques, en utilisant le niveau hiérarchique des unités de mémorisation et d'autres critères, par exemple la popularité des données. Dans un mode particulier de réalisation de l'invention, l'étape de comptage compte également les requêtes d'accès reçues par les entités de mémorisation pour obtenir ces données. Ce mode particulier de l'invention permet également de prendre en compte le trafic réel subi par les entités de mémorisation pour la distribution des données dans le réseau. Dans un mode particulier de réalisation de l'invention, l'étape de mise à jour utilise des valeurs seuils représentatives d'une audience des données, pour déterminer si une unité de mémorisation doit être ajoutée ou supprimée de la liste.

Dans le mode de réalisation décrit ici, le dispositif comporte, dans sa mémoire non volatile, des registres pour mémoriser des valeurs seuils utilisées pour déterminer si une unité de mémorisation doit être ajoutée ou supprimée de la liste.

Ces valeurs seuils peuvent être prédéfinies, et fixées par l'opérateur pour répartir la charge à priori dans le réseau.

Dans un mode particulier de réalisation de l'invention, ces valeurs seuils sont variables et sont mises à jour lorsqu'un événement prédéterminé se produit.

Cet événement peut notamment être une réestimation de l'audience visant les données, un incident de déploiement ou de livraison, une notification selon laquelle un équipement réseau est devenu indisponible, l'acquittement d'une livraison ou d'un déploiement déroulé avec succès, une mise à jour de la popularité du contenu (mise à jour périodique ou suite à une absence de requête pendant un temps donné) ou la réception d'un message de mise à jour envoyé par un autre noeud du système. Plus précisément, dans un mode de réalisation, la mise à jour comprend :

- une sous-étape consistant à déterminer si le résultat du comptage précité est supérieur à la première valeur pour chacun des noeuds ; et si c'est le cas :
- une sous-étape de sélection, en dehors de cette liste, d'au moins une troisième entité de mémorisation dite de déploiement susceptible de mémoriser ces données, cette étape de sélection prenant en compte au moins les résultats des étapes de comptage ; et
- une étape de déclenchement d'un déploiement des données depuis une entité de mémorisation appartenant à la liste vers une unité de déploiement par envoi d'une requête de déploiement à au moins une de ces entités.

L'homme du métier comprendra que ce mécanisme permet tout simplement d'ajouter une entité de mémorisation à la liste et d'organiser le déploiement des données vers cette entité. De façon similaire, dans un mode particulier de réalisation de l'invention, l'étape de mise à jour comprend :

- une sous-étape consistant à déterminer si le résultat de l'étape de comptage est inférieur à la deuxième valeur précitée pour chacun des noeuds et si c'est le cas :
- une étape de sélection dans la liste d'au moins une quatrième entité de mémorisation, cette étape prenant en compte les résultats des étapes de comptage ; et
- une étape d'envoi à cette entité de mémorisation d'une requête pour qu'elle supprime les données de sa mémoire.

Dans un autre mode particulier de réalisation de l'invention, les valeurs seuils sont choisies par l'opérateur, pour un noeud donné, par estimation de la popularité pour un contenu donné, et par analyse de la charge du réseau.

On notera qu'il peut y avoir autant de valeurs seuils que de noeuds et de types de contenus, ou que de producteurs de ces contenus.

Il a été mentionné précédemment, que pendant l'ingestion, la sélection de l'entité de mémorisation prenant en compte les coûts opérateurs, par exemple un coût de transfert, un coût de mémorisation et un coût de livraison des données.

De tels critères de coûts peuvent également être utilisés, selon l'invention, pour sélectionner la troisième entité de mémorisation objet du déploiement.

Dans un mode particulier de réalisation, les différentes étapes du procédé de communication de données sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de communication de données tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous en référence aux dessins qui en illustrent un exemple de réalisation dépourvu de tout caractère limitatif. Sur les figures :

- la figure 1 représente un premier réseau de télécommunications dans lequel l'invention peut être mise en oeuvre ;
- la figure 2 représente schématiquement une requête de mémorisation pouvant être utilisée dans un mode particulier de réalisation de l'invention ;
- la figure 3 représente une racine du réseau de la figure 1, conforme à un mode particulier de réalisation de l'invention ;
- la figure 3A représente un noeud du réseau de la figure 1, conforme à un mode particulier de réalisation de l'invention ;
- la figure 4 représente un dispositif de communication de données conforme à un mode particulier de réalisation de l'invention, incorporé dans la racine de la figure 3 et dans le noeud de la figure 3A ;
- les figures 5 et 6 représentent sous forme d'organigramme, les principales étapes d'un procédé de communication de données, mis en oeuvre par le dispositif de la figure 4, dans un mode particulier de réalisation de l'invention ;
- la figure 7 représente schématiquement une requête d'accès pouvant être utilisée dans un mode particulier de réalisation de l'invention ;
- la figure 8 représente le réseau de la figure 1, dans un état pouvant être obtenu par l'invention ;
- la figure 9 représente un deuxième réseau de télécommunications dans lequel l'invention peut être mise en oeuvre ; et
- la figure 10 représente un troisième réseau de télécommunications dans lequel l'invention peut être mise en oeuvre.

Description détaillée de l'invention

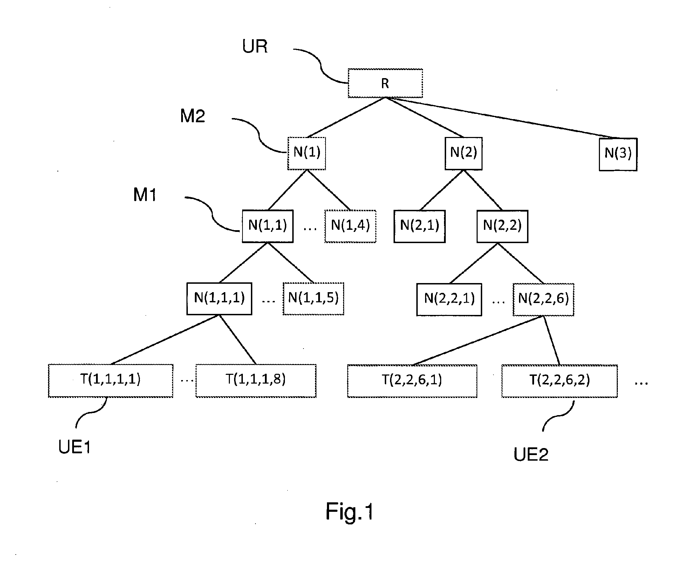

La figure 1 représente un premier réseau de télécommunications dans lequel l'invention peut être mise en oeuvre.

Ce réseau de télécommunications est un réseau hiérarchique, et plus précisément un réseau organisé sous forme d'un arbre, cet arbre comprenant une racine R, différents niveaux de noeuds N et feuilles terminales T. Il est à noter que les feuilles terminales font partie intégrante de l'arbre, au même titre que les noeuds.

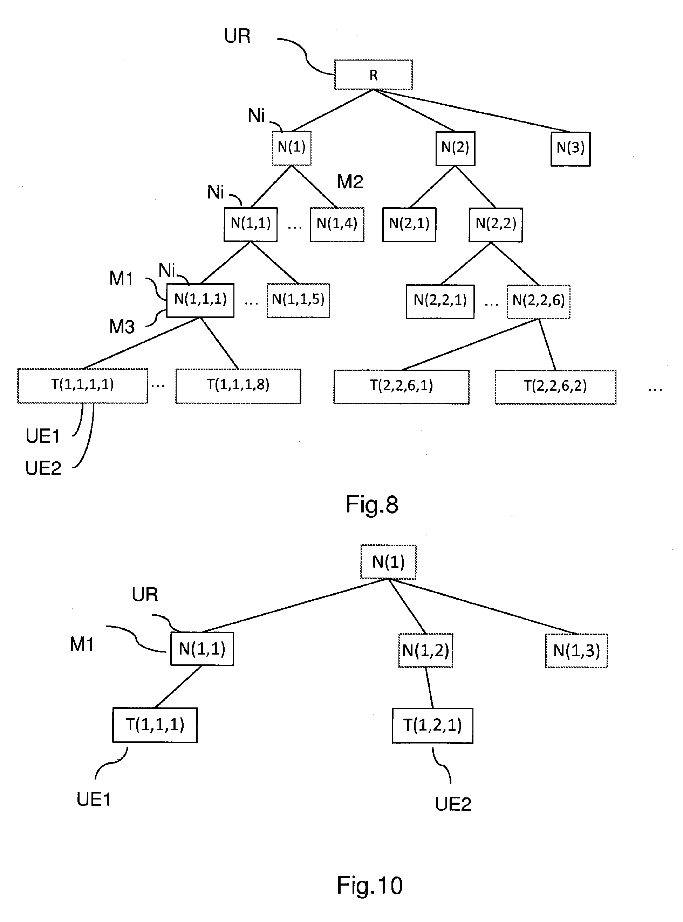

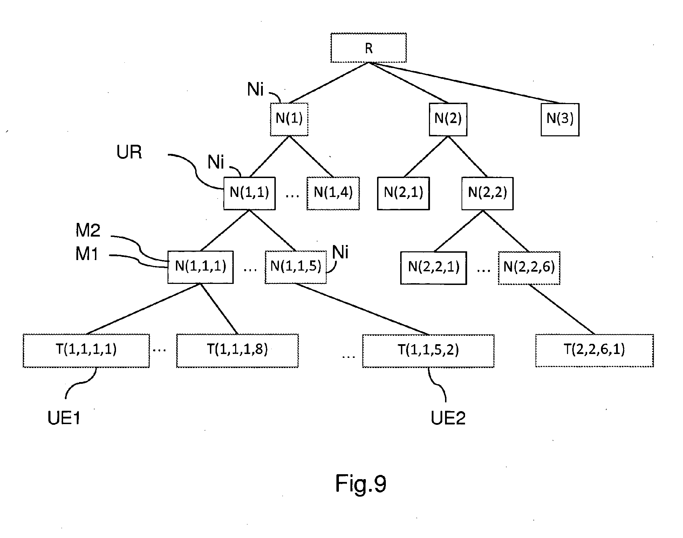

A la figure 1, comme aux figures 8 et 9 décrites ultérieurement, on utilisera les notations suivantes :

- $N(i)$ : noeud de niveau 1 ;
- $N(i, j)$ : noeud de niveau 2 rattaché au noeud de niveau 1 $N(i)$ ;
- etc. ; et
- terminaux $T(i,j,k,l)$ : terminaux rattachés au noeud de niveau inférieur $N(i,j,k)$.

Dans l'exemple de la figure 1, l'unité réceptrice au sens de l'invention est la racine R du réseau. On notera que dans ce mode de réalisation, la racine (unité réceptrice au sens de l'invention) possède une connaissance complète des niveaux hiérarchiques des noeuds du réseau.

Nous supposerons, dans cet exemple, qu'une unité émettrice UE1, constituée par le terminal $T(1,1,1,1)$ souhaite mémoriser des données dans le réseau. Dans un mode particulier de réalisation de l'invention, ces données peuvent avoir été générées par l'unité émettrice UE1, mais cela n'est pas indispensable au sens de l'invention.

Les données numériques peuvent être constituées par un fichier, ou par des données en streaming.

Conformément à l'invention, lorsque l'unité émettrice UE1 souhaite mémoriser des données dans le réseau, elle envoie une requête de mémorisation RQ1, celle-ci étant acheminée par le réseau jusqu'à l'unité réceptrice UR à savoir, dans cet exemple, jusqu'à la racine R.

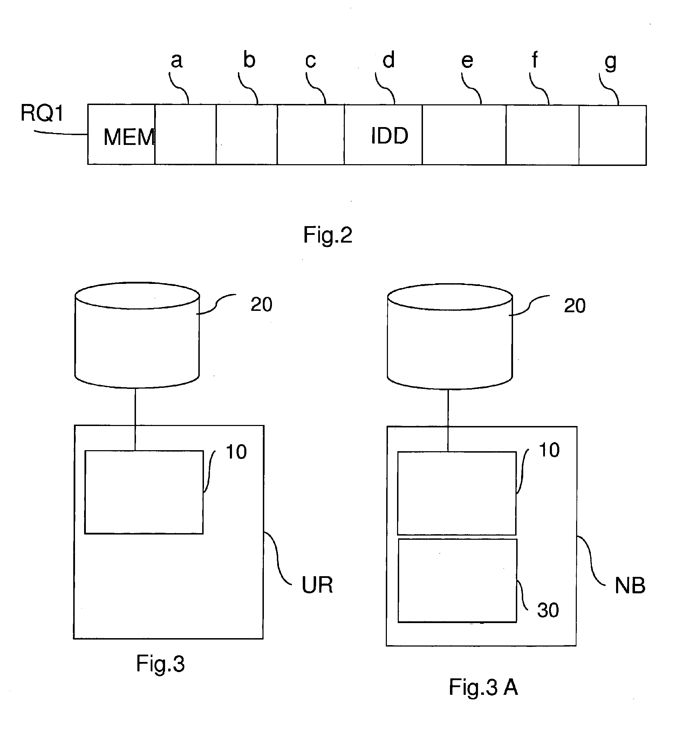

Une telle requête est représentée, dans un exemple de réalisation, à la figure 2.

En premier lieu, cette requête comporte un champ MEM représentatif du fait que cette requête est une requête de mémorisation.

Dans l'exemple de réalisation décrit ici, cette requête comporte en outre un certain nombre de champs à savoir :

- un champ a comportant des caractéristiques du contenu, par exemple le type et le format, le type d'équipement (PC, caméra, téléphone, assistant personnel, ...), et la localisation géographique de l'unité émettrice UE1;
- un champ b comportant des caractéristiques du type d'accès réseau (Edge, 3D, LTE) ;
- un champ c comportant des caractéristiques de diffusion des données numériques : il peut s'agir en particulier d'une zone de couverture géographique de diffusion saisie par l'utilisateur du terminal UE1 et une audience visée pour ces données, par exemple en fonction de la langue ou du sujet du contenu;
- un champ d comportant un identifiant unique IDD représentatif de ces données ;
- un champ f comportant des données auxiliaires autrement appelées métadonnées ou métadata, celles-ci pouvant notamment contenir une catégorie de ces données (sports, cultures, ...), un événement (programme télévisuel par exemple) utilisé pour estimer l'audience précitée, un titre, une description, une durée de validité, l'identifiant de l'auteur de ces données, un droit de diffusion, celui-ci pouvant restreindre la couverture géographique de ces données, un format de ces données ; et
- un champ g comportant des caractéristiques des ressources nécessaires pour la mémorisation de ces données, par exemple en terme de disponibilité ou de charge.

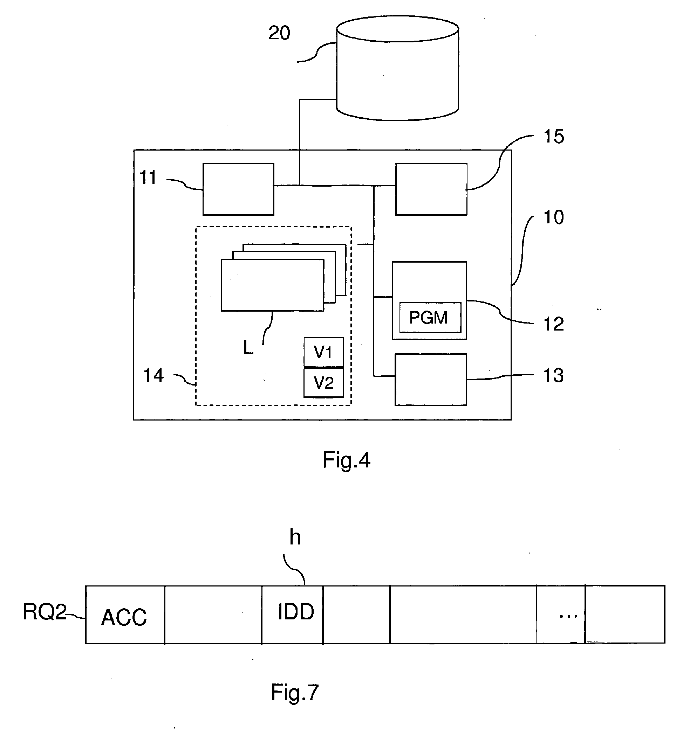

Cette requête de mémorisation RQ1 est reçue par l'unité réceptrice UR dont l'architecture matérielle va maintenant être décrite en référence aux figures 3, 3A et 4.

Dans l'exemple de réalisation décrit ici, l'unité réceptrice est un serveur d'architecture conventionnelle remarquable uniquement en ce qu'il comporte un dispositif de communication de données 10 conforme à l'invention et dont l'architecture est détaillée à la figure 4.

Dans l'exemple de réalisation décrit ici, ce dispositif a l'architecture conventionnelle d'un ordinateur. Il comporte notamment un processeur 11, une mémoire vive de type RAM 13, une mémoire morte de type ROM 12, une mémoire non volatile réinscriptible 14, des moyens d'accès à une base de données 20 contenant des informations globales du réseau et des moyens 15 de communication sur le réseau constitués par exemple par une carte réseau et des pilotes logiciels correspondants.

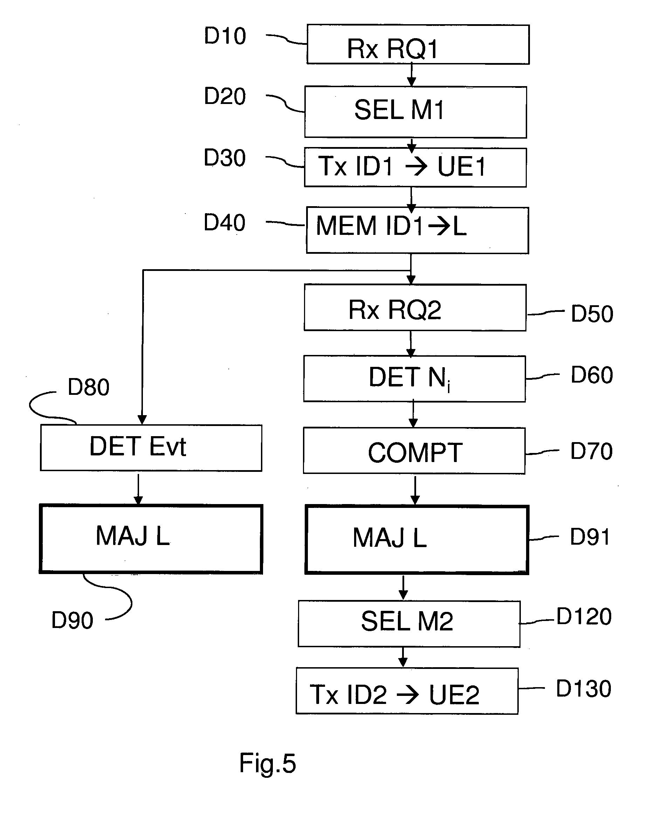

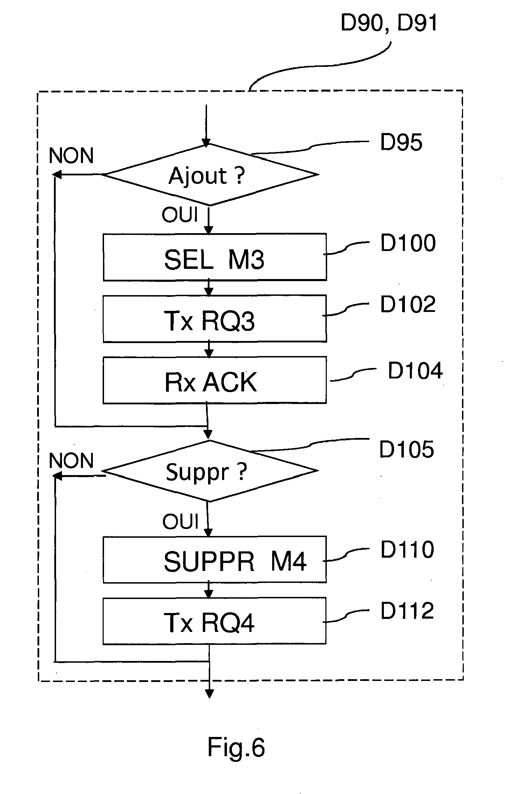

La mémoire morte de type ROM 12 constitue un support d'enregistrement conforme à l'invention lisible par le processeur 11. Ce support d'enregistrement mémorise un programme d'ordinateur PGM conforme à un mode particulier de réalisation de l'invention, et dont les principales étapes vont maintenant être décrites en référence aux figures 5 et 6.

Le programme d'ordinateur PGM est, dans l'exemple de réalisation de la figure 1, exécuté par la racine R du réseau. On suppose que la racine R reçoit, au cours d'une étape D10, la requête de mémorisation RQ1 émise par le terminal (1,1,1,1).

Conformément à l'invention, l'unité réceptrice UR, constituée par la racine R, sélectionne, au cours d'une étape générale D20, une entité de mémorisation M1 (première entité au sens de l'invention) apte à mémoriser les données annoncées par la requête.

Conformément à l'invention, cette sélection est faite en prenant en compte le niveau hiérarchique de l'entité de mémorisation M1 dans le réseau, ce niveau hiérarchique étant obtenu à partir des caractéristiques minimum, en termes de mémorisation, de l'entité M1 (contenue dans le champ g) et des caractéristiques de diffusion des données numériques contenues dans le champ c.

En variante, la sélection du niveau hiérarchique prend aussi en compte la localisation géographique ou réseau de l'unité émettrice.

Dans un autre mode de réalisation, la sélection du niveau hiérarchique prend aussi en compte les caractéristiques du type d'accès au réseau.

L'étape D20 de sélection de l'entité de mémorisation M1 est suivie par une étape D30 au cours de laquelle l'unité réceptrice UR envoie à l'unité émettrice UE1 l'identifiant ID1 de l'entité de mémorisation M1.

Dans l'exemple de réalisation décrit ici, le procédé de communication selon l'invention comporte une étape D40 de mémorisation de l'identifiant ID1 de l'entité de mémorisation M1 dans une liste L.

Dans l'exemple de réalisation décrit ici, cette liste L est mémorisée dans une mémoire non volatile réinscriptible 14 du dispositif 10 selon l'invention.

Cette liste L est associée à un identifiant unique IDD des données concernées par la requête de mémorisation RQ1.

Dans l'exemple de réalisation décrit ici, cet identifiant unique IDD est compris dans le champ d tel que décrit précédemment en référence à la figure 2.

En variante, cet identifiant unique IDD peut être obtenu à partir d'autres informations comprises dans la requête.

On notera, d'une façon générale, que la liste L a pour fonction de mémoriser les entités de mémorisation qui mémorisent, à un instant t, au moins une partie des données concernées par la requête RQ1.

Comme il sera décrit ultérieurement, il se peut tout-à-fait que plusieurs entités de mémorisation comportent ces données.

Les étapes D10 à D40 qui viennent être décrites constituent une première phase du procédé selon l'invention pouvant être qualifiée de phase d'ingestion de données, autrement dit de première mémorisation des données dans le réseau. Nous allons maintenant décrire comment la liste L peut être mise à jour.

Dans l'exemple de réalisation décrit ici, cette liste peut être mise à jour soit lorsqu'un événement est détecté (étape D80), soit lorsqu'une requête d'accès aux données est reçue par l'unité réceptrice UR (étape D50).

Plus précisément, les événements suivants peuvent être utilisés pour mettre à jour la liste L, lorsqu'ils sont détectés (étape D80) :

- modification de la validité des données, par exemple fin de la période de validité ;
- modification de l'audience dans le réseau ;
- modification de la zone géographique dans laquelle ces données doivent être distribuées ;
- réception d'une commande externe émise par un utilisateur ou par une unité de surveillance du réseau, par exemple une unité de contrôle de charge ;

Cette étape D90 de mise à jour va maintenant être décrite de façon plus détaillée en référence la figure 6.

Cette mise à jour peut consister à :

- ne rien faire ;
- ajouter une ou plusieurs entités de mémorisation M3 (unité de déploiement au sens de l'invention dans la liste) ; et/ou
- supprimer une ou plusieurs entités de mémorisation M4 présentes dans la liste.

Dans l'exemple décrit ici, l'étape générale de mise à jour D90 comporte un premier test D95 au cours duquel on détermine si une unité de mémorisation M3 doit être ajoutée dans la liste.

Un critère pour prendre une telle décision peut être de déterminer que l'audience locale ou globale est susceptible de croître fortement.

Lorsque ce cas se produit, l'étape générale D90 de mise à jour comporte une sous-étape D100 dans laquelle on sélectionne une ou plusieurs unités de déploiement M3, en mettant en oeuvre, par exemple, un mécanisme similaire à celui utilisé précédemment pour la sélection de l'entité de mémorisation M1. Ce mécanisme permet de déployer toute ou partie des données mémorisées dans au moins une unité de mémorisation de la liste L vers l'unité de déploiement M3.

A cet effet, l'unité réceptrice R, envoie, au cours d'une étape D102 une requête R3 dite de déploiement, à l'unité source comprenant les données à transférer ou à l'unité de déploiement M3 sélectionnée pour recueillir ces données.

Cette étape D102 peut être qualifiée de déclenchement du déploiement.

Dans l'exemple de réalisation décrit ici, l'unité réceptrice UR attend un accusé de réception (étape 104).

Comme précisé précédemment, la mise à jour de la liste peut aussi consister à supprimer au moins une unité de mémorisation M4 comprise dans la liste L (étape D110). Cette suppression peut être déterminée au cours d'un test D105 notamment lorsque l'audience supposée pour ces données numériques est à la baisse.

Dans un mode de réalisation décrit ici, l'unité réceptrice R envoie, au cours d'une étape D112, une requête RQ4 à l'unité de mémorisation supprimée de la liste, pour que celle-ci puisse notamment libérer de la place mémoire. La mise à jour qui vient d'être décrite (étape générale D90) est effectuée lorsqu'un événement déjà décrit à l'étape D80 est détecté.

Nous nous plaçons maintenant dans le contexte particulier dans lequel l'unité réceptrice R reçoit, au cours d'une étape D50, une requête d'accès RQ2 aux données numériques.

Une telle requête est représentée schématiquement à la figure 7.

Elle comporte notamment un champ ACC représentatif du fait que cette requête est une requête d'accès.

Cette requête comporte également des informations permettant à l'unité réceptrice d'identifier quelles sont les données concernées. Dans l'exemple de réalisation décrit ici, elle comporte un champ h comportant un champ IDD identique à celui du champ d de la requête RQ1. D'une façon générale, dans l'exemple de réalisation décrit ici, le procédé selon l'invention propose, pour déterminer comment la liste L doit être mise à jour, de mesurer l'audience réelle des données et le coût, vu du point de vue de l'opérateur (coût de transit, coût de stockage, coût de livraison) des accès précédents faits sur ces données. Plus précisément, dans l'exemple de réalisation décrit ici, l'unité réceptrice UR détermine, au cours d'une étape D60, les noeuds dit de "chemin" situés, dans le réseau, entre l'unité émettrice de la requête d'accès RQ2 et le noeud de niveau 1 situé sur le chemin entre ces unités émettrices et la racine R.

On notera que l'unité émettrice de la requête d'accès RQ2, notée UE2 sur la figure 1 n'est pas nécessairement la même unité que celle UE1 ayant émis la requête de mémorisation à l'étape D10.

Dans l'exemple de réalisation décrit ici, l'unité émettrice UE2 est le terminal T(2,2,6,2).

Par conséquent, en utilisant la définition précédente, les noeuds dits de chemin sont les noeuds N(2,2,6), N(2,2) et N(2).

Ensuite, au cours d'une étape D70, l'unité réceptrice compte pour chacun des noeuds de chemin les requêtes d'accès reçues par ces noeuds pour les données concernées.

Dans un mode particulier de l'invention, on compte également, au cours de cette étape D70, les requêtes de transfert reçues par les entités de mémorisation du réseau, et transmises par un terminal, pour obtenir les données numériques.

Quoiqu'il en soit, le résultat de l'étape de comptage, visant les noeuds de chemin, et éventuellement les entités de mémorisation, est utilisé pour mettre à jour la liste L au cours d'une étape D91.

Cette étape D91 est strictement similaire à l'étape D90 décrite précédemment et ne sera donc pas détaillée ici.

On notera simplement que la mise à jour peut consister à ne rien faire, à ajouter ou à supprimer des entités de la liste L.

Lorsqu'une requête d'accès RQ2 a été reçue, (étape D50), après la mise à jour de la liste L, (étape D91) l'unité réceptrice R sélectionne une entité de mémorisation M2 qu'elle désigne pour répondre à la requête d'accès de l'unité émettrice UE2 au cours d'une étape D120.

Les critères utilisés pour sélectionner cette deuxième entité de mémorisation M2 ne font pas partie de l'invention.

On peut notamment utiliser les critères décrits dans le document publié sous le n° WO/2009 056743.

L'étape D120 de sélection de la deuxième entité de mémorisation M2 est suivie par une étape D130 au cours de laquelle l'unité réceptrice UR envoie une information à l'unité émettrice UE2 pour que celle-ci puisse obtenir l'identifiant de cette unité de mémorisation M2.

Dans le mode de réalisation le plus simple, cette étape consiste simplement à envoyer l'identifiant ID2 de l'unité de mémorisation M2 à l'unité émettrice UE2.

Dans l'exemple précédemment décrit, en référence aux figures 1 à 7, les décisions, en ce qui concerne le choix des unités de mémorisation pendant l'ingestion, le choix des entités de déploiement ont été effectués par la racine R du réseau.

Il est important de noter, que conformément à l'invention, la sélection de la deuxième entité (étape D120) est effectuée après la mise à jour de la liste (étape D91).

La figure 8 permet de bien illustrer l'intérêt du mécanisme de déploiement.

Sur cette figure, on illustre le fait que la première entité de mémorisation M1, sélectionnée au cours de l'ingestion, a été supprimée de la liste L au cours d'une étape D110, puis redésignée comme unité de déploiement M3, au cours de l'étape D100.

Il est important de bien comprendre que l'invention peut être mise en oeuvre par un noeud du réseau et non pas uniquement la racine R.

La figure 9 représente par conséquent, un deuxième réseau dans lequel l'invention peut être mise en oeuvre.

On notera que dans cet exemple l'unité réceptrice est constituée par un noeud du réseau et plus précisément par un noeud de niveau 2 N(1,1). On notera que dans ce mode de réalisation, le noeud N(1, 1), unité réceptrice au sens de l'invention, possède une connaissance partielle des niveaux hiérarchiques des noeuds du réseau.

On notera également, dans cet exemple, que l'unité de mémorisation M1 identifiée (étape D20), pendant l'étape d'ingestion, première unité à mémoriser les données, est également l'unité M2, identifiée à l'étape D120, qui livrera les données au terminal UE2.

Dans le cas particulier où on utilise un critère d'audience pour déterminer si une unité de mémorisation doit être ajoutée ou supprimée de la liste L, on peut, dans un mode de réalisation, utiliser deux valeurs seuils V1 et V2 à cet effet.

Plus précisément, lorsque le comptage des requêtes d'accès ou de transfert devient supérieur à la première valeur V1, on décide d'ajouter un élément à la liste et lorsque le résultat de contact est inférieur à la valeur V2, on décide de supprimer un élément de la liste.

Ces valeurs V1 et V2 peuvent être initialisées à une valeur prédéfinie et avantageusement mises à jour, au cours de l'étape D90, lorsque des événements sont détectés, par exemple des événements visant à modifier à la baisse, ou à la hausse, l'audience estimée pour ces données.

Un exemple de calcul et d'utilisation d'une valeur seuil V1 va maintenant être décrit en référence à la figure10, une telle valeur seuil étant utilisée pour sélectionner une unité de mémorisation M3 à ajouter à la liste L, comme décrit précédemment en référence à l'étape D100.

Dans cet exemple la première unité émettrice UE1 est le terminal T(1,1,1), l'unité réceptrice UR est le noeud N(1,1) et la deuxième unité émettrice UE2 est le terminal T(1,2,1). On note pour la suite de cet exemple :

- P(C, N1, N2) : le nombre de requêtes d'accès reçues par le noeud N1 et relatives à la zone couverte par le noeud N2, pour un contenu C ;
- CT(N,M) : le coût de transport du contenu C du noeud N vers le noeud M ;
- CS(N) : le coût de stockage du contenu C par le noeud N ; et

- CL(N) : le coût de livraison du contenu C par le noeud N.

On se place dans l'hypothèse dans laquelle le terminal T(1,1,1) envoie une requête de mémorisation RQ1 du contenu C vers l'unité réceptrice N(1,1).

Les étapes principales du procédé de communication selon l'invention sont :

- étape D10 : réception, par l'unité réceptrice (N(1, 1) de la requête de mémorisation émise par le terminal T(1,1,1) ;
- étape D20 : sélection de la première unité de mémorisation. Dans cet exemple, le noeud N(1, 1) est sélectionné, le contenu C ayant une portée géographique limitée à la zone couverte par ce noeud ;
- étape D30 : l'unité réceptrice N(1, 1) indique au terminal T(1,1,1) les coordonnées de l'unité de mémorisation N(1,1) sur laquelle le contenu C sera mémorisé ;
- étape D40 : le noeud N(1,1) met à jour la liste L des noeuds auprès desquels le contenu C est disponible ;
- étape D50 : le terminal T(1, 2, 1) envoie une requête d'accès RQ2 à l'unité réceptrice N(1,1) pour le contenu C.
- étape D60 : l'unité réceptrice N(1,1) détermine lés noeuds de chemin entre le terminal T(1,2,1) et l'unité de mémorisation N(1, 1) à savoir les noeuds N(1,2), N(1) ;
- étape D70 : comptage des requêtes d'accès pour les noeuds de chemin N(1,2), N(1) et pour l'unité de mémorisation N(1, 1) ;
- étape D91 : mise à jour de la valeur seuil V1 :

Dans cet exemple, le seuil V1 est la plus petite des valeurs seuils SN(1,2) et SN(1) calculées pour les noeuds N(2, 1) et N(1) comme suit :

$$SN(1,2) = \frac{[CT(N(1,1),N(1,2)) + CS(N(1,2))]}{[CT(N(1,2), N(1,2)+CL(N(1,1)) - CL(N(1,2))]}$$

$$SN(1) = \frac{[CT(N(1,1),N(1)) + CS(N(1))]}{[CT(N(1,2), N(1)+CL(N(1,1)) - CL(N(1))]}$$

- étape D100 de sélection de M3 si P(C, N(1,1),N(1,2)) > V1, avec :

  M3 étant choisi égal à N(1, 2), si V1 égale SN(1, 2) ;
  M3 étant choisi égal à N(1), si V1 égale SN(1).

**Revendications**

1. Procédé de communication de données numériques mis en oeuvre par une entité réceptrice (UR) dans un réseau hiérarchique, ladite entité ayant connaissance des niveaux hiérarchiques des noeuds du réseau, ce procédé comprenant, sur réception (D10) d'une requête (RQ1) de mémorisation de données émise par une première unité émettrice (UE1) :

   - une étape de sélection (D20) d'au moins une première entité (M1) de mémorisation des données, ladite étape de sélection prenant en compte au moins le niveau hiérarchique de ladite entité de mémorisation (M1) dans le réseau ; et
   - une étape d'envoi (D30) à ladite première unité émettrice (UE1) d'une information lui permettant d'obtenir l'identifiant (ID1) de l'entité de mémorisation des données (M1).

2. Procédé de communication de données numériques selon la revendication 1, **caractérisé en ce que** ladite étape de sélection (D20) prend aussi en compte une localisation de ladite première unité émettrice (UE1).

3. Procédé de communication de données numériques selon la revendication 1 ou 2, **caractérisé en ce qu'**il comprend en outre une étape (D40) de mémorisation dudit identifiant (ID1) dans une liste (L) associée à un identifiant unique (IDD) desdites données, cet identifiant pouvant être obtenu à partir de champs de ladite requête de mémorisation (RQ1).

**4.** Procédé de communication de données selon la revendication 3, **caractérisé en ce qu'**il comprend :

- une étape (D90) de mise à jour de ladite liste (L).

**5.** Procédé de communication de données numériques selon la revendication 4, **caractérisé en ce que** ladite étape (D90) de mise à jour est effectuée sur détection d'un événement (D80).

**6.** Procédé de communication de données numériques selon la revendication 3, **caractérisé en ce qu'**il comprend, sur réception (D50) d'une requête d'accès (RQ2) à des données numériques, la requête étant émise par une deuxième unité émettrice (UE2),
lesdites données étant mémorisées au moins dans une entité de mémorisation (M1),

- une étape de détermination (D60) des noeuds (Ni) dits de chemin entre ladite deuxième unité émettrice (UE2) et le dernier noeud avant la racine (R) dudit réseau ;
- au moins pour chacun desdits noeuds de chemin (Ni) une étape de comptage (D70) de requêtes d'accès reçues par ce noeud pour lesdites données ;
- une étape (D91) de mise à jour de ladite liste (L) effectuée en fonction du résultat des étapes de comptage ;
- une étape de sélection (D120) parmi les entités de ladite liste (L) d'une deuxième entité de mémorisation (M2) désignée pour répondre à ladite requête d'accès (RQ2) ;
- une étape d'envoi (D130) d'une information permettant à ladite unité émettrice (UE2) d'obtenir l'identifiant de ladite deuxième entité de mémorisation (M2).

**7.** Procédé de communication de données numériques selon la revendication 6, **caractérisé en ce que** ladite étape de comptage (D70) compte également les requêtes d'accès reçues par ladite entité de mémorisation (M1) pour obtenir lesdites données.

**8.** Procédé de communication de données numériques selon l'une quelconque des revendications 4 à 7, **caractérisé en ce que** ladite étape de mise à jour (D90,D91) utilise des valeurs seuils (V1, V2) représentatives d'une audience desdites données, pour déterminer si une unité de mémorisation (M3, M4) doit être ajoutée ou supprimée de ladite liste (L).

**9.** Procédé de communication selon la revendication 8, **caractérisé en ce que** au moins une desdites valeurs seuils (V1, V2) est mise à jour (D90, D91) suite à ladite détection (D80).

**10.** Procédé de communication de données numériques selon la revendication 8, **caractérisé en ce que** ladite étape (D91) de mise à jour comprend :

- une sous-étape consistant à déterminer si le résultat de ladite étape de comptage (D70) est supérieur à ladite première valeur (V1) pour chaque noeud (Ni,M1) ; et si c'est le cas :
- une sous-étape de sélection (D100) en dehors de ladite liste (L) d'au moins une troisième entité de mémorisation dite entité de déploiement (M3) susceptible de mémoriser lesdites données, ladite étape de sélection prenant en compte au moins les résultats des étapes de comptage ;
- une sous-étape de déclenchement d'un déploiement desdites données depuis une entité de mémorisation (M1) appartenant à ladite liste (L) vers ladite entité de déploiement (M3) par envoi (D102) d'une requête (RQ3) de déploiement à au moins une desdites entités (M1,M3).

**11.** Procédé de communication de données numériques selon la revendication 8, **caractérisé en ce que** ladite étape (D90) de mise à jour comprend :

- une sous-étape consistant à déterminer si le résultat de ladite étape de comptage (D70) est inférieur à ladite deuxième valeur (V2) pour chaque noeud (Ni, M1) ; et si c'est le cas :
- une sous-étape de suppression (D110) dans ladite liste (L) d'au moins une quatrième entité de mémorisation (M4), ladite étape de sélection prenant en compte au moins les résultats des étapes de comptage ;
- une sous-étape d'envoi (D112) à ladite unité de mémorisation (M4) d'une requête (RQ3) de suppression desdites données.

**12.** Procédé de communication selon l'une quelconque des revendications 1 à 10, **caractérisé en ce que** ladite étape (D20) de sélection de la première entité de mémorisation (M1) ou ladite sous-étape de sélection (D100) de ladite entité de déploiement (M3) prend en compte au moins un élément choisi parmi :

- le coût du transport des données sur les liens du réseau ;
- le coût de mémorisation desdites données par ladite entité de mémorisation (M1, M3) ; et
- une localisation des terminaux à qui sont destinées lesdites données.

13. Dispositif (10) de communication de données numériques pouvant être incorporé dans une entité réceptrice (UR) dans un réseau hiérarchique, cette entité ayant connaissance de niveaux hiérarchiques des noeuds du réseau, ce dispositif comprenant :

- des moyens (15) de réception d'une requête (RQ1) de mémorisation de données émise par une première unité émettrice (UE1),
- des moyens (11, 12, 13) de sélection (D20) d'une première entité (M1) de mémorisation des données prenant en compte au moins le niveau hiérarchique de ladite entité (M1) de mémorisation dans le réseau,
- des moyens (15) d'envoi à ladite première unité émettrice (UE1) d'une information lui permettant d'obtenir l'identifiant de ladite première entité de mémorisation des données (M1).

14. Racine (R) pouvant être utilisée dans un réseau de télécommunications hiérarchique, la racine (R) comportant un dispositif (10) de communication selon la revendication 13.

15. Noeud (NB) pouvant être utilisé dans un réseau de télécommunications hiérarchique, le noeud (NB) comportant :

- un dispositif (10) de communication selon la revendication 13 ; et
- des moyens (30) pour mémoriser les données reçues par ledit dispositif.

16. Programme d'ordinateur (PGM) comportant des instructions pour l'exécution des étapes du procédé de communication de données selon l'une quelconque des revendications 1 à 12 lorsque ledit programme est exécuté par un ordinateur.

17. Support d'enregistrement (12) lisible par un ordinateur sur lequel est enregistré un programme d'ordinateur (PGM) comprenant des instructions pour l'exécution des étapes du procédé de communication de données selon l'une quelconque des revendications 1 à 12.

**Patentansprüche**

1. Verfahren zur digitalen Datenübertragung, das von einer Empfangseinheit (UR) in einem hierarchischen Netzwerk eingesetzt wird, wobei die Einheit Kenntnis von den hierarchischen Ebenen der Knoten des Netzwerks hat, wobei dieses Verfahren bei Empfang (D10) einer Speicheranfrage (RQ1) von Daten, die von einer ersten Sendeeinheit (UE1) entsandt wird, umfasst:

- einen Schritt der Auswahl (D20) mindestens einer ersten Einheit (M1) zur Speicherung der Daten, wobei der Auswahlschritt mindestens die hierarchische Ebene der Speichereinheit (M1) in dem Netz berücksichtigt; und
- einen Schritt des Sendens (D30) einer Information an die erste Sendeeinheit (UE1), die es ihr ermöglicht, den Identifikator (ID1) der Datenspeichereinheit (M1) zu erhalten.

2. Verfahren zur digitalen Datenübertragung nach Anspruch 1, **dadurch gekennzeichnet, dass** der Auswahlschritt (D20) auch eine Lokalisierung der ersten Sendeeinheit (UE1) berücksichtigt.

3. Verfahren zur digitalen Datenübertragung nach Anspruch 1 oder 2, **dadurch gekennzeichnet, dass** es ferner einen Schritt (D40) der Speicherung des Identifikators (ID1) in einer Liste (L), die einem einzigen Identifikator (IDD) der Daten zugeordnet ist, umfasst, wobei dieser Identifikator aus Feldern der Speicheranfrage (RQ1) erhalten werden kann.

4. Verfahren zur Datenübertragung nach Anspruch 3, **dadurch gekennzeichnet, dass** es umfasst:

- einen Schritt (D90) der Aktualisierung der Liste (L).

**5.** Verfahren zur digitalen Datenübertragung nach Anspruch 4, **dadurch gekennzeichnet, dass** der Schritt (D90) der Aktualisierung bei Erfassung eines Ereignisses (D80) durchgeführt wird.

**6.** Verfahren zur digitalen Datenübertragung nach Anspruch 3, **dadurch gekennzeichnet, dass** es bei Empfang (D50) einer Zugriffsanfrage (RQ2) auf digitale Daten, wobei die Anfrage von einer zweiten Sendeeinheit (UE2) entsandt wird, wobei die Daten mindestens in einer Speichereinheit (M1) gespeichert sind, umfasst:

- einen Schritt der Bestimmung (D60) der so genannten Streckenknoten (Ni) zwischen der zweiten Sendeeinheit (UE2) und dem letzten Knoten vor der Wurzel (R) des Netzwerks;
- mindestens für jeden der Streckenknoten (Ni) einen Schritt des Zählens (D70) von von diesem Knoten empfangenen Zugriffsanfragen für die Daten;
- einen Schritt (D91) der Aktualisierung der Liste (L), der in Abhängigkeit vom Ergebnis der Zählschritte erfolgt;
- einen Schritt der Auswahl (D120) einer zweiten Speichereinheit (M2) unter den Einheiten der Liste (L), die dazu bestimmt ist, auf die Zugriffsanfrage (RQ2) zu antworten;
- einen Schritt des Sendens (D130) einer Information, die es der Sendeeinheit (UE2) ermöglicht, den Identifikator der zweiten Speichereinheit (M2) zu erhalten.

**7.** Verfahren zur digitalen Datenübertragung nach Anspruch 6, **dadurch gekennzeichnet, dass** der Zählschritt (D70) auch die Zugriffsanfragen zählt, die von der Speichereinheit (M1) empfangen werden, um die Daten zu erhalten.

**8.** Verfahren zur digitalen Datenübertragung nach einem der Ansprüche 4 bis 7, **dadurch gekennzeichnet, dass** der Aktualisierungsschritt (D90, D91) Schwellenwerte (V1, V2) verwendet, die für eine Gruppe der Daten repräsentativ sind, um zu bestimmen, ob eine Speichereinheit (M3, M4) zur Liste (L) hinzugefügt oder von dieser gestrichen werden soll.

**9.** Übertragungsverfahren nach Anspruch 8, **dadurch gekennzeichnet, dass** mindestens einer der Schwellenwerte (V1, V2) nach der Erfassung (D80) aktualisiert (D90, D91) wird.

**10.** Verfahren zur digitalen Datenübertragung nach Anspruch 8, **dadurch gekennzeichnet, dass** der Aktualisierungsschritt (D91) umfasst:

- einen Unterschritt, der darin besteht, zu bestimmen, ob das Ergebnis des Zählschrittes (D70) größer als der erste Wert (V1) für jeden Knoten (Ni, M1) ist; und wenn dies der Fall ist:
- einen Unterschritt der Auswahl (D100) außerhalb der Liste (L) mindestens einer dritten Speichereinheit, Darlegungseinheit (M3) genannt, die geeignet ist, die Daten zu speichern, wobei der Auswahlschritt mindestens die Ergebnisse der Zählschritte berücksichtigt;
- einen Unterschritt des Auslösens einer Darlegung der Daten von einer Speichereinheit (M1), die der Liste (L) angehört, zu der Darlegungseinheit (M3) durch Senden (D102) einer Darlegungsanfrage (RQ3) an mindestens eine der Einheiten (M1, M3).

**11.** Verfahren zur digitalen Datenübertragung nach Anspruch 8, **dadurch gekennzeichnet, dass** der Aktualisierungsschritt (D90) umfasst:

- einen Unterschritt, der darin besteht, zu bestimmen, ob das Ergebnis des Zählschrittes (D70) kleiner als der zweite Wert (V2) für jeden Knoten (Ni, M1) ist; und wenn dies der Fall ist:
- einen Unterschritt des Löschens (D110) in der Liste (L) mindestens einer vierten Speichereinheit (M4), wobei der Auswahlschritt mindestens die Ergebnisse der Zählschritte berücksichtigt;
- einen Unterschritt des Sendens (D112) einer Anfrage (RQ3) auf Löschung der Daten an die Speichereinheit (M4).

**12.** Übertragungsverfahren nach einem der Ansprüche 1 bis 10, **dadurch gekennzeichnet, dass** der Auswahlschritt (D20) der ersten Speichereinheit (M1) oder der Unterschritt der Auswahl (D100) der Darlegungseinheit (M3) mindestens ein Element berücksichtigt, das ausgewählt ist unter:

- den Beförderungskosten der Daten auf den Verbindungen des Netzwerks;
- den Speicherkosten der Daten durch die Speichereinheit (M1, M3); und
- einer Lokalisierung der Terminals, für die die Daten bestimmt sind.

**13.** Vorrichtung (10) zur digitalen Datenübertragung, die in eine Empfangseinheit (UR) in einem hierarchischen Netzwerk integriert werden kann, wobei diese Einheit Kenntnis von hierarchischen Ebenen der Knoten des Netzwerks hat, wobei diese Vorrichtung umfasst:

    - Mittel (15) für den Empfang einer Speicheranfrage (RQ1) von Daten, die von einer ersten Sendeeinheit (UE1) entsandt wird,
    - Mittel (11, 12, 13) zur Auswahl (D20) einer ersten Speichereinheit (M1) der Daten, die mindestens die hierarchische Ebene der Speichereinheit (M1) im Netzwerk berücksichtigen,
    - Mittel zum Senden (15) einer Information an die erste Sendeeinheit (UE1), die es ihr ermöglicht, den Identifikator der ersten Datenspeichereinheit (M1) zu erhalten.

**14.** Wurzel (R), die in einem hierarchischen Telekommunikationsnetzwerk verwendet werden kann, wobei die Wurzel (R) eine Übertragungsvorrichtung (10) nach Anspruch 13 umfasst.

**15.** Knoten (NB), der in einem hierarchischen Telekommunikationsnetzwerk verwendet werden kann, wobei der Knoten (NB) umfasst:

    - eine Übertragungsvorrichtung (10) nach Anspruch 13; und
    - Mittel (30) zum Speichern der von der Vorrichtung empfangenen Daten.

**16.** Computerprogramm (PGM), umfassend Befehle für die Ausführung der Schritte des Datenübertragungsverfahrens nach einem der Ansprüche 1 bis 12, wenn das Programm von einem Computer ausgeführt wird.

**17.** Von einem Computer lesbarer Aufzeichnungsträger (12), auf dem ein Computerprogramm (PGM) aufgezeichnet ist, umfassend Befehle für die Ausführung der Schritte des Datenübertragungsverfahrens nach einem der Ansprüche 1 bis 12.

**Claims**

**1.** Method for digital data communication, applied by a receiving entity (UR) in a hierarchical network, said entity having a knowledge of the hierarchical levels of the nodes of the network, this method comprising, on reception (D10) of a request (RQ1) for storing data transmitted by a first transmitting unit (UE1):

    - a step (D20) of selecting at least a first entity (M1) for storing the data, said selection step taking into consideration at least the hierarchical level of said storage entity (M1) in the network; and
    - a step (D30) of transmitting to said first transmitting unit (UE1) an item of information enabling it to obtain the identifier (ID1) of the entity for storing the data (M1).

**2.** Method for digital data communication according to Claim 1, **characterized in that** said selection step (D20) also takes into consideration a location of said first transmitting unit (UE1).

**3.** Method for digital data communication according to Claim 1 or 2, **characterized in that** it further comprises a step (D40) of storing said identifier (ID1) in a list (L) associated with a unique identifier (IDD) of said data, this identifier being obtainable from fields of said storage request (RQ1).

**4.** Method of data communication according to Claim 3, **characterized in that** it comprises:

    - a step (D90) of updating said list (L).

**5.** Method for digital data communication according to Claim 4, **characterized in that** said updating step (D90) is executed on the detection of an event (D80).

**6.** Method for digital data communication according to Claim 3, **characterized in that** it comprises, on reception (D50) of a request (RQ2) for access to digital data, the request being transmitted by a second transmitting unit (UE2), said data being stored at least in a storage entity (M1),

    - a step (D60) of determining the nodes (Ni), called the path nodes, between said second transmitting unit (UE2) and the last node before the root (R) of said network;
- at least for each of said path nodes (Ni), a step (D70) of counting access requests received by this node for said data;
- a step (D91) of updating said list (L), executed as a function of the result of the counting steps;
- a step (D120) of selecting, from among the entities of said list (L), a second storage entity (M2) designated to respond to said access request (RQ2);
- a step (D130) of transmitting an item of information enabling said transmitting unit (UE2) to obtain the identifier of said second storage entity (M2) .

7. Method for digital data communication according to Claim 6, **characterized in that** said counting step (D70) also counts the access requests received by said storage entity (M1) for obtaining said data.

8. Method for digital data communication according to any of Claims 4 to 7, **characterized in that** said updating step (D90, D91) uses threshold values (V1, V2) representative of an audience for said data in order to determine whether a storage unit (M3, M4) should be added to or removed from said list (L).

9. Method for communication according to Claim 8, **characterized in that** at least one of said threshold values (V1, V2) is updated (D90, D91) after said detection (D80).

10. Method for digital data communication according to Claim 8, **characterized in that** said updating step (D91) comprises:

- a sub-step of determining whether the result of said counting step (D70) is greater than said first value (V1) for each node (Ni, M1), and, if this is the case:
- a sub-step (D100) of selecting from outside said list (L) at least a third storage entity, called a deployment entity (M3), capable of storing said data, said selection step taking into consideration at least the results of the counting steps;
- a sub-step of launching a deployment of said data from a storage entity (M1) belonging to said list (L) towards said deployment entity (M3) by transmitting (D102) a deployment request (RQ3) to at least one of said entities (M1, M3).

11. Method for digital data communication according to Claim 8, **characterized in that** said updating step (D90) comprises:

- a sub-step of determining whether the result of said counting step (D70) is less than said second value (V2) for each node (Ni, M1), and, if this is the case:
- a sub-step (D110) of deleting from said list (L) at least a fourth storage entity (M4), said selection step taking into consideration at least the results of the counting steps;
- a sub-step (D112) of transmitting to said storage unit (M4) a request (RQ3) for the deletion of said data.

12. Method for communication according to any of Claims 1 to 10, **characterized in that** said step (D20) of selecting the first storage entity (M1) or said sub-step (D100) of selecting said deployment entity (M3) takes into consideration at least one element chosen from among:

- the cost of data transfer over the links of the network;
- the cost of storing said data by means of said storage entity (M1, M3); and
- a location of the terminals to which said data are addressed.

13. Device (10) for digital data communication, which can be incorporated into a receiving entity (UR) in a hierarchical network, this entity having a knowledge of the hierarchical levels of the nodes of the network, this device comprising:

- means (15) for receiving a request (RQ1) for data storage transmitted by a first transmitting unit (UE1),
- means (11, 12, 13) for selecting (D20) a first entity (M1) for storing the data, taking into consideration at least the hierarchical level of said storage entity (M1) in the network, and
- means (15) for transmitting to said first transmitting unit (UE1) an item of information enabling it to obtain the identifier of the first entity for storing the data (M1).

14. Root (R) which can be used in a hierarchical telecommunications network, the root (R) including a communication device (10) according to Claim 13.

15. Node (NB) which can be used in a hierarchical telecommunications network, the node (NB) including:

   - a communication device (10) according to Claim 13; and
   - means (30) for storing the data received by said device.

16. Computer program (PGM) including instructions for executing the steps of the data communication method according to any of Claims 1 to 12 when said program is executed by a computer.

17. A computer-readable recording medium (12) on which is recorded a computer program (PGM) comprising instructions for executing the steps of the data communication method according to any of Claims 1 to 12.

Fig.1

Fig.2

Fig.3

Fig.3 A

20

11

15

10

L

PGM

12

V1

V2

14

13

Fig.4

h

RQ2

ACC

IDD

...

Fig.7

D10 — Rx RQ1

D20 — SEL M1

D30 — Tx ID1 → UE1

D40 — MEM ID1 → L

Rx RQ2 — D50

DET $N_i$ — D60

D80

DET Evt

COMPT — D70

MAJ L

MAJ L — D91

D90

SEL M2 — D120

Tx ID2 → UE2 — D130

Fig.5

D90, D91

D95

NON  ◇ Ajout ?

OUI

SEL M3 — D100

Tx RQ3 — D102

Rx ACK — D104

D105

NON  ◇ Suppr ?

OUI

SUPPR M4 — D110

Tx RQ4 — D112

Fig.6

Fig.8

Fig.10

Fig.9

## RÉFÉRENCES CITÉES DANS LA DESCRIPTION

**Documents brevets cités dans la description**

- US 20070180468 A1
- US 20020143888 A

- WO 2009056743 A